# EUROPEAN PATENT SPECIFICATION

(11) **EP 1 649 626 B1**
(45) Date of publication and mention of the grant of the patent: **29.06.2011**
(21) Application number: 04744571.3
(22) Date of filing: 13.07.2004
(51) Int. Cl.: H04L 1/00

(54) **Transmitting data frames with less interframe space (IFS) time**
Übertragung von Datenrahmen mit weniger Zeit im Raum zwischen Rahmen (IFS)
Transmission de trames de données selon des delais d'espaces intertrames reduits

(30) Priority: 16.07.2003 US 487694 P; 15.12.2003 US 529589 P
(43) Date of publication of application: 26.04.2006
(60) Divisional application: 10182551.1
(73) Proprietor: IPG Electronics 503 Limited, Les Banques St Peter Port Guernsey GY1 3DA (GB)
(72) Inventor: DEL PRADO PAVON, Javier, Briarcliff Manor, NY 10510-8001 (US); NANDAGOPALAN, Sai Shankar, Briarcliff Manor, NY 10510-8001 (US)
(74) Representative: Talbot-Ponsonby, Clare Josephine
(86) International application number: PCT/IB2004/051212
(87) International publication number: WO 2005/008945

(56) References cited:
- JAMES P K GILB: "IEEE P802.15 WORKING GROUP FOR WIRELESS PERSONAL AREA NETWORKS, WPAN" IEEE P802.15, [Online] 31 October 2002 (2002-10-31), pages 1-112, XP002313754 SAN DIEGO Retrieved from the Internet: URL:http://grouper.ieee.org/groups/802/15/ pub/2002/Nov02/02392r16P802-15_TG3-LB19-ru nning-comment-resolutions.pdf> [retrieved on 2005-01-17]
- "MAC sublayer functional description" ANSI/IEEE STD 802.11, XX, XX, 1999, pages 70-97, XP002235739

## Description

This application claims priority to US Provisional Applications Serial Nos. 60/478,156 filed on June 12, 2003, and 60/487,694 filed on July 16, 2003.

The present invention relates to data network transmission techniques, and in particular, to an optimized method for more efficiently transmitting data frames, in which the data frames are transmitted over a data network with less Inter Frame Space (IFS) time.

In data transmission, an ARQ (Automatic Retransmission Request) protocol specifies that each frame has to be acknowledged by the receiver with an ACK (Acknowledge) frame. This, however, reduces the efficiency of data transmission since the transmitter has to wait for receiving the ACK before it can send a next data frame. This is also true in a wireless data network using IEEE 802.11 protocol for MAC data frames transmission. To improve the efficiency, IEEE 802.11e defines a No ACK policy in which the frames are not acknowledged, and a Block ACK policy in which the frames are acknowledged in groups with a single Block ACK frame. These new policies considerably reduce the frame overhead and increase the efficiency.

Moreover, IEEE 802.11e has introduced the concept of transmission opportunity (TXOP). By this concept, the non-AP QSTA (non access point QoS enhanced station) and QAP (QoS enhanced access point) contend the medium for time, and once they get access to the channel they can hold the channel for the time specified by TXOPlimit and transmit multiple data frames with an inter frame space (IFS) time which is SIFS (Short IFS), IEEE 802.11e specifies that during a TXOPlimit, a non-AP QSTA/QAP may use the No ACK or Block ACK policy. By No ACK, each frame is transmitted and the ACK is not expected for that frame. If the TXOPlimit were larger than the single frame transmission time and if more frames are pending transmission at the MAC queue, the succeeding frames may be transmitted after SIFS time. Similarly, in the Block ACK policy, frames are transmitted successively with an inter frame space time SIFS before the transmission of the ACKs by the receiver.

This is, however, not optimized in terms of transmission efficiency since SIFS time is actually required only if the receiving non-AP OSTA/QAP were to return an acknowledgement as it includes the time to process the frame plus the receiver (RX) to transmitter (TX) turnaround time. In case of No ACK as well as Block ACK policies, it is not necessary to have the receiver wait for the SIFS time to transmit the ACK frame (except for the last frame in the block ACK policy after which the receiver must send an ACK to the transmitted).

James P. K. Gilb "IEEE P802.15 working group for wireless personal area networks WPAN", San Diego, 31.October 2002 describes a document, which has been prepared to assist the IEEE P802.15 standard. The duration of SIFS allowed between frames that does not expect a response to next successive frame transmitted over the medium is reduced to a MIFS duration in the CTA between a frame with no-ACK policy and Dly-ACK policy. The MIFS time is 2µs. The SIFS time is 10µs.

Therefore, there is a need in the art for a method to more efficiently transmit data frames in a data network with less inter frame space (IFS) time.

The object is solved by the features of the independent claims.

According to the present invention, a method of transmitting data frames over a data network is provided, which comprises a step of sending the data frames from a transmitter to a receiver with an Inter Frame Space (IFS) time. In particular, the IFS does not include a time that the transmitter needs to change from a receiver state to a transmitter state. Preferably, the IFS only includes a time needed for the transmitter to detect ending of a frame and beginning of a next frame. Thus, the transmitted may transmit the data frames continuously with an IFS shorter than SIFS since it does not include the turnaround time.

The above and further features and advantages of the present invention will be clearer by reading the detailed description of preferred embodiment of the present invention, with reference to the accompanying drawings in which:
Figure 1 illustrates transmission of data frames with IFS between frames; and
Figure 2 illustrates that IFS is SIFS as required in the prior art.

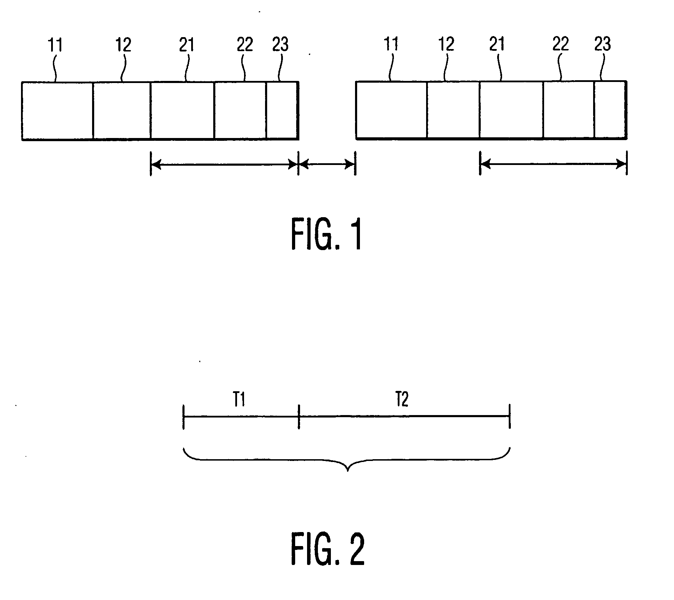

As illustrated in Figure 1, a data frame typically includes a physical layer control procedure (PLCP) overhead and a MAC data frame. The PLCP overhead comprises a PLCP preamble 11 and a PLCP header 12. The PLCP preamble 11 includes information mainly used for timing and synchronization functions and the PLCP header 12 mainly includes information about the length of the frame, the transmission rate, etc. The MAC data frame comprises a MAC header 21 portion including address information, etc., a MAC frame body portion 22 and a CRC (Cyclic Redundancy Check) portion 23, which is known as Frame Control Sequence (FCS) in the MAC layer.

When a transmitter continuously transmits sequential data frames to a receiver, an inter frame space (IFS) time is required between transmission of two sequential frames. Conventionally, this IFS time may be as short as SIFS (Short IFS) under No ACK and Block ACK policies adopted by IEEE 802.11e. As shown in Figure 2, SIFS includes a first portion of time T I required for the transmitter to process a data frame, i.e., to detect the end of a frame and the start of a next frame, as well as a second portion of time T2, i.e., the "turnaround time" for the transmitter to change from a receiver state to a transmitter state. The SIFS time is a waste under No ACK and Block ACK policies as the transmitter does not need to receive the ACK from the receiver before it can continue to send the next data frame.

According to the present invention, under No ACK and Block ACK policies, the transmitter does not need to wait for SIFS to send a next data frame. In particular, frames that do not need an ACK immediately are transmitted continuously with an IFS which can be much shorter than SIFS. More specifically, the IFS time does not need to include the turnaround time T2 which otherwise is needed for the transmitter to change from the receiver state to the transmitter state, and only includes a time T1 needed for the transmitter to process the frame, i.e., to detect the end of the frame, and the beginning of the next frame. Therefore, data frames can be transmitted with an inter frame space much less than SIFS, thus considerably increasing the transmission efficiency.

For example, though the preferred embodiment is described in a wireless data network using IEEE 802.11 protocol amended by IEEE 802.11e draft standard, it is understood that the present invention is not limited to a wireless data network environment. Thus, the protection scope of the present invention is intended to be solely defined in the accompanying claims.

## Claims

1. A method of transmitting first and second data frames from a transmitter to a receiver over a wireless data network under at least one of a NO ACK and a BLOCK ACK policy of a wireless communication protocol that complies with an IEEE 802 standard, the method comprising:
causing the transmitter to transmit the first data frame; and
causing the transmitter to transmit the second data frame after an Inter Frame Space, IFS, time,
wherein the IFS time does not include a turnaround time, T2, and so is shorter than a Short IFS, SIFS, time specified by the wireless communication protocol.

2. The method of claim 1, wherein the wireless communication protocol is an IEEE 802.11 protocol.

3. The method of any of claims 1 or 2, wherein each of the first and second data frames includes a preamble, a header and a body.

4. The method of any one of claims 1 to 3, wherein each of the first and second data frames includes a PLCP overhead and a MAC data frame.

5. The method of any one of claims 1 to 4, where the transmitter is embodied in a non-AP QSTA or a QAP.

6. A transmitter comprising:
means for transmitting a first data frame over a wireless data network under at least one of a NO ACK and a BLOCK ACK policy of a wireless communication protocol that complies with an IEEE 802 standard; and
means for transmitting a second data frame over the wireless data network under the at least one of the NO ACK and the BLOCK ACK policy of the wireless communication protocol, the second data frame being transmitted after an Inter Frame Space, IFS, time,
wherein the IFS time does not include a turnaround time, T2, and so is shorter than a Short IFS, SIFS, time specified by the wireless communication protocol.

7. The transmitter of claim 6, wherein the wireless communication protocol is an IEEE 802.11 protocol.

8. The transmitter of claims 6 or 7, wherein each of the first and second data frames includes a preamble, a header and a body.

9. The transmitter of any one of claims 6 to 8, wherein each of the first and second data frames includes a PLCP overhead and a MAC data frame.

10. The transmitter of any one of claims 6 to 9 that is embodied in a non-AP QSTA or a QAP.

## Patentansprüche

1. Ein Verfahren zum Senden von ersten und zweiten Datenrahmen von einem Sender zu einem Empfänger über ein drahtloses Datennetzwerk gemäß mindestens einer Strategie aus einer Strategie ohne Bestätigung (NO ACK policy) und einer Strategie mit Blockbestätigung (BLOCK ACK policy) eines drahtlosen Kommunikationsprotokolls, das einen IEEE 802-Standard erfüllt, wobei das Verfahren folgendes umfasst:
Bewirken, dass der Sender den ersten Datenrahmen sendet; und
Bewirken, dass nach einer Zeit eines Inter Frame Space, IFS, der Sender den zweiten Datenrahmen sendet;
wobei die IFS-Zeit eine Ausführzeit, T2, nicht einschließt und somit kürzer ist als eine Zeit eines Short IFS, SIFS, die von dem drahtlosen Kommunikationsprotokoll spezifiziert wird.

2. Das Verfahren nach Anspruch 1, wobei das drahtlose Kommunikationsprotokoll ein IEEE 802.11-Protokoll ist.

3. Das Verfahren nach einem der Ansprüche 1 oder 2, wobei jeder der ersten und zweiten Datenrahmen eine Präambel, einen Header und einen Body einschließt.

4. Das Verfahren nach einem der Ansprüche 1 bis 3, wobei jeder der ersten und zweiten Datenrahmen einen PLCP-Overhead und einen MAC-Datenrahmen einschließt.

5. Das Verfahren nach einem der Ansprüche 1 bis 4, wobei der Sender in einem Nicht-AP QSTA oder einem QAP enthalten ist.

6. Ein Sender, der folgendes umfasst:
Mittel zum Senden eines ersten Datenrahmens über ein drahtloses Datennetzwerk gemäß mindestens einer Strategie aus einer Strategie ohne Bestätigung (NO ACK policy) und einer Strategie mit Blockbestätigung (BLOCK ACK policy) eines drahtlosen Kommunikationsprotokolls, das einen IEEE 802-Standard erfüllt; und
Mittel zum Senden eines zweiten Datenrahmens über das drahtlose Datennetzwerk gemäß der mindestens einen Strategie aus der Strategie ohne Bestätigung (NO ACK policy) und der Strategie mit Blockbestätigung (BLOCK ACK policy) des drahtlosen Kommunikationsprotokolls, wobei der zweite Datenrahmen nach einer Zeit eines Inter Frame Space, IFS, gesendet wird,
wobei die IFS-Zeit eine Ausführzeit, T2, nicht einschließt und somit kürzer ist als eine Zeit eines Short IFS, SIFS, die von dem drahtlosen Kommunikationsprotokoll spezifiziert wird.

7. Der Sender nach Anspruch 6, wobei das drahtlose Kommunikationsprotokoll ein IEEE 802.11-Protokoll ist.

8. Der Sender nach einem der Ansprüche 6 oder 7, wobei jeder der ersten und zweiten Datenrahmen eine Präambel, einen Header und einen Body einschließt.

9. Der Sender nach einem der Ansprüche 6 bis 8, wobei jeder der ersten und zweiten Datenrahmen einen PLCP-Overhead und einen MAC-Datenrahmen einschließt.

10. Der Sender nach einem der Ansprüche 6 bis 9, der in einem Nicht-AP QSTA oder einem QAP enthalten ist.

## Revendications

1. Procédé de transmission de première et seconde trames de données d'un émetteur à un récepteur sur un réseau de données sans fil sous au moins l'une d'une politique de non-acquittement (NO ACK) et d'une politique d'acquittement de bloc (BLOCK ACK) d'un protocole de communication sans fil qui est conforme à une norme IEEE 802, le procédé comprenant les opérations consistant à :
- amener l'émetteur à émettre la première trame de données ; et
- amener l'émetteur à émettre la seconde trame de données après un temps d'espace inter-trame, IFS,
le temps IFS ne comprenant pas un temps de retournement, T2, et étant donc plus court qu'un temps IFS court, SIFS, spécifié par le protocole de communication sans fil.

2. Procédé selon la revendication 1, dans lequel le protocole de communication sans fil est un protocole IEEE 802.11.

3. Procédé selon l'une des revendications 1 ou 2, dans lequel chacune des première et seconde trames de données comprend un préambule, un en-tête et un corps.

4. Procédé selon l'une quelconque des revendications 1 à 3, dans lequel chacune des première et seconde trames de données comprend un surdébit de protocole de convergence de la couche physique (PLCP) et une trame de données de contrôle d'accès au support (MAC).

5. Procédé selon l'une quelconque des revendications 1 à 4, dans lequel l'émetteur est intégré dans une station de qualité de service (QSTA) non-point d'accès (AP) ou un point d'accès de qualité de service (QAP) _{.}

6. Emetteur comprenant :
- des moyens pour émettre une première trame de données sur un réseau de données sans fil sous au moins l'une d'une politique de non-acquittement (NO ACK) et d'une politique d'acquittement de bloc (BLOCK ACK) d'un protocole de communication sans fil qui est conforme à une norme IEEE 802 ; et
- des moyens pour émettre une seconde trame de données sur le réseau de données sans fil sous la au moins une politique de la politique de non-acquittement (NO ACK) et de la politique d'acquittement de bloc (BLOCK ACK) du protocole de communication sans fil, la seconde trame de données étant émise après un temps d'espace inter-trame, IFS,
le temps IFS ne comprenant pas un temps de retournement, T2, et étant donc plus court qu'un temps IFS court, SIFS, spécifié par le protocole de communication sans fil.

7. Emetteur selon la revendication 6, dans lequel le protocole de communication sans fil est un protocole IEEE 802.11.

8. Emetteur selon l'une des revendications 6 ou 7, dans lequel chacune des première et seconde trames de données comprend un préambule, un en-tête et un corps.

9. Emetteur selon l'une quelconque des revendications 6 à 8, dans lequel chacune des première et seconde trames de données comprend un surdébit de protocole de convergence de la couche physique (PLCP) et une trame de données de contrôle d'accès au support (MAC).

10. Emetteur selon l'une quelconque des revendications 6 à 9, lequel émetteur est intégré dans une station de qualité de service (QSTA) non-point d'accès (AP) ou un point d'accès de qualité de service (QAP).
